# EUROPÄISCHE PATENTSCHRIFT

(11) **EP 0 668 688 B1**
(45) Veröffentlichungstag und Bekanntmachung des Hinweises auf die Patenterteilung: **07.05.1997**
(21) Anmeldenummer: 95101970.2
(22) Anmeldetag: 14.02.1995
(51) Int. Cl.: H04M 19/08, H04Q 11/04

(54) **Netz- und Vorfeldabschlusseinrichtung eines Telekommunikationsnetzes**
Network connecting equipment and concentrator connecting equipment in a telecommunication network
Dispositif de connexion de réseau et étage de concentration dans un réseau de télécommunication

(30) Priorität: 17.02.1994 DE 4405037
(43) Veröffentlichungstag der Anmeldung: 23.08.1995
(73) Patentinhaber: Alcatel SEL Aktiengesellschaft, D-70435 Stuttgart (DE)
(72) Erfinder: Doll, Reinhard, D-71229 Leonberg (DE); Schmoll, Siegfried, D-71282 Hemmingen (DE); Ohl, Wolf, D-70825 Korntal (DE)
(74) Vertreter: Schätzle, Albin, Dipl.-Phys.

(56) Entgegenhaltungen:
- KONGRESSBAND TELEMATICA '88 Seiten 336 - 350, XP000077706 A.REINHOLD 'ISDN-Schnittstelle und Endgeräte'
- PROCEEDINGS OF THE NATIONAL COMMUNICATIONS FORUM, OAK BROOK, ILLINOIS US Seiten 416 - 426, XP000220397 L.D. LINDQUIST 'Basics of Protocols: Terminology, Use and Meaning'
- ERICSSON REVIEW - ISDN, Bd.61, Mai 1984, STOCKHOLM SE Seiten 34 - 41 A. RUDBERG ET AL. 'Planning of ISDN'
- BRITISH TELECOMMUNICATIONS ENGINEERING, Bd.10, Nr.1, April 1991, LONDON GB Seiten 26 - 33, XP000243340 'Exploiting the Copper Network'
- PHILIPS TELECOMMUNICATION REVIEW, HILVERSUM NL Seiten 26 - 32, XP000258972 'A Line Termination Unit for primary rate B-channel access with optical fibre'

## Beschreibung

Die Erfindung betrifft eine Netzabschlußeinrichtung und eine Vorfeldabschlußeinrichtung eines Telekommunikationsnetzes.

In dem "Lehrbuch der Fernmeldetechnik" (1986), Band 2, von K. Bergmann, ist auf den Seiten 1332 bis 1336 der Aufbau eines Telekommunikationsnetzes mit Netzabschlüssen, Endstellen und Vorfeldeinrichtungen beschrieben. Jede Endstelle, d.h. jeder Teilnehmer ist dabei mit einem separaten Netzabschluß verbunden, der sich in den Räumen des Teilnehmers befindet. Da jeder Netzabschluß eine Stromversorgung benötigt, muß jeder Netzabschluß in den Räumen des Teilnehmers mit einer eigenen Stromversorgung versehen werden.

Es ist deshalb Aufgabe der Erfindung, eine Netzabschlußeinrichtung zur Verfügung zu stellen, die es ermöglicht mehrere Netzabschlüsse technisch weniger aufwendig zu installieren und/oder herzustellen.

Diese Aufgabe wird durch die Lehre der Patentansprüche 1 und 6 gelöst. Vorteilhafte Ausgestaltungen sind den Unteransprüchen zu entnehmen.

Des weiteren bringt der Zusammenschluß mehrerer Netzabschlüsse wartungstechnische Vorteile.

Im folgenden wird die Erfindung anhand eines Ausführungsbeispiels unter Zuhilfenahme der Figuren 1, 2 und 3 erläutert. Es zeigen:
- Fig. 1: eine schematische Darstellung einer erfindungsgemäßen Netzabschlußeinrichtung eines Telekommunikationsnetzes in Verbindung mit mehreren Teilnehmern und mit einer Vorfeldeinrichtung,
- Fig. 2: den schematisch dargestellten Aufbau der erfindungsgemäßen Netzabschlußeinrichtung, und
- Fig. 3: die schematische Darstellung eines Netzabschlusses der erfindungsgemäßen Netzabschlußeinrichtung.

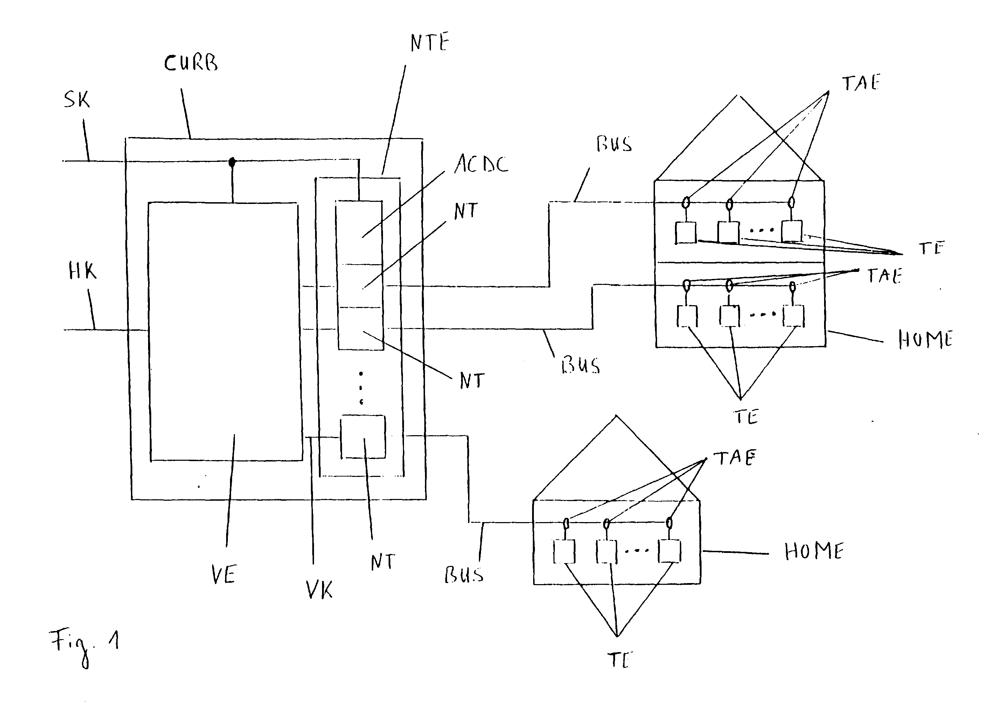

Ein Ausführungsbeispiel der Erfindung wird nun anhand der Figuren 1, 2 und 3 beschrieben. Fig. 1 zeigt eine erfindungsgemäße Netzabschlußeinrichtung NTE eines Telekommunikationsnetzes, sowie ihre teilnehmerseitigen und netzseitigen Verbindungen BUS, VK. Der Übersichtlichkeit halber sind die Stromversorgungsleitungen innerhalb der Netzabschlußeinrichtung NTE nicht mit eingezeichnet.

Beim Ausführungsbeispiel liegt ein diensteintegriertes digitales Netz ISDN als Telekommunikationsnetz vor. Die Erfindung kann auch bei einem anderen Netz als dem ISDN angewendet werden.

Die Netzabschlußeinrichtung NTE beinhaltet eine Spannungswandlungseinrichtung ACDC und mehrere Netzabschlüsse NT. Die Spannungswandlungseinrichtung ACDC wird über ein Stromversorgungskabel SK von einer vom Telekommunikationsnetz unabhängigen Stromversorgung gespeist und wandelt eine Eingangswechselspannung in mehrere Ausgangsgleichspannungen um. Die Ausgangsgleichspannungen dienen der Versorgung der Netzabschlüsse NT und zum anderen über die Netzabschlüsse auch der Versorgung ein oder mehrerer Teilnehmerendgeräte TE.

Netzseitig ist die Netzabschlußeinrichtung NTE über mehrere Verzweigungskabel VK mit der Vorfeldeinrichtung VE verbunden. Die Vorfeldeinrichtung VE wird ebenfalls über das Stromversorgungskabel SK von der vom Telekommunikationsnetz unabhängigen Stromversorgung gespeist. Die Netzabschlußeinrichtung NTE und die Vorfeldeinrichtung VE sind zu einer Vorfeldabschlußeinrichtung CURB zusammengefaßt. Dabei befinden sich die Netzabschlußeinrichtung NTE und die Vorfeldeinrichtung VE in einem gemeinsamen Gehäuse. Der Zusammenschluß zu einer Vorfeldabschlußeinrichtung CURB ist für ferngespeiste Vorfeldeinrichtungen VE, d.h. über das Telekommunikationsnetz gespeiste Vorfeldeinrichtungen, wie z.B. Kabelverzweiger oder Verteiler von Vorteil, da die Vorfeldeinrichtung VE in diesem Fall über das durch die Netzabschlußeinrichtung NTE vorhandene Stromkabel SK mitversorgt werden kann, so daß die Fernspeisung entfällt. Die Netzabschlußeinrichtung NTE und die Vorfeldeinrichtung VE können sich auch in getrennten Gehäusen befinden. Dies ist für komplexere Vorfeldeinrichtungen VE, wie Multiplexer, Konzentratoren oder digitale Mehrdienstemodule zur Unterdrückung von erhöhten Wärmeentwicklungen, die die Funktionsweise der Netzabschlüsse beeinträchtigen könnten von Vorteil.

Die Vorfeldeinrichtung VE ist über ein oder mehrere Hauptkabel HK und gegebenenfalls über Zwischeneinrichtungen mit einer Vermittlungsstelle verbunden. Hauptkabel HK, Verzweigungskabel VK und Endstellenleitungen BUS können Kupferkabel oder optische Wellenleiterkabel sein. Bei Übergängen zwischen optischen Wellenleiterkabeln und Kupferkabeln sind optisch-elektrisch Wandler erforderlich, so sind z.B. bei optischen Wellenleiterkabeln als Hauptkabel HK und Kupferkabeln als Verzweigungskabel VK optisch-elektrisch Wandler in der Vorfeldeinrichtung VE erforderlich.

Teilnehmerseitig ist die Netzabschlußeinrichtung NTE über Endstellenleitungen BUS und Telekommunikationsanschlußeinheiten TAE mit den Engeräten TE der einzelnen Teilnehmer verbunden. Die Netzabschlußeinrichtung NTE befindet sich außerhalb der Räume der Teilnehmer und bei einer geringen Anzahl von Teilnehmern auch außerhalb der Gebäude der Teilnehmer HOME. Bei einer größeren Anzahl von Teilnehmern kann sich die Netzabschlußeinrichtung NTE, und auch die Vorfeldeinrichtung VE, innerhalb der Gebäude der Teilnehmer HOME befinden. Für die Endstellenleitungen BUS sind je nach Entfernung und Anzahl von Endgeräteanschlüssen verschiedene Ausführungsformen nötig. Bei einem Endgeräteanschluß, d.h. eine Telekommunikationsanschlußeinheit TAE pro Teilnehmer ist die Endstellenleitung BUS als Punkt-zu-Punkt Verbindung ausgeführt. Bei mehreren Endgeräteanschlüssen pro Teilnehmer und einer Entfernung von mehreren hundert Metern zwischen Teilnehmer und Netzabschlußeinrichutng NTE ist die Endstellenleitung BUS als erweiterter Bus ausgeführt. Bei mehreren Endgeräteanschlüssen pro Teilnehmer und einer Entfernung bis zu wenigen hundert Metern zwischen Teilnehmer und Netzabschlußeinrichtung NTE ist die Endstellenleitung BUS als passiver Bus ausgeführt.

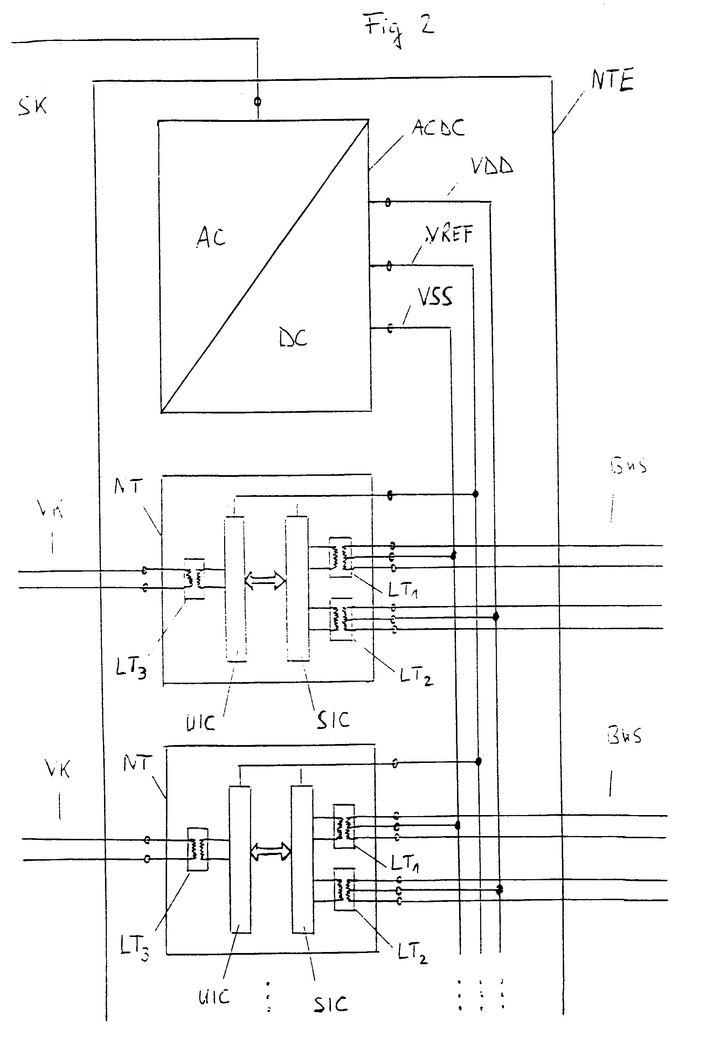

Fig. 2 zeigt nun die Leitungsführung der Stromversorgungsleitungen in einer erfindungsgemäßen Netzabschlußeinrichtung NTE eines Telekommunikationsnetzes.

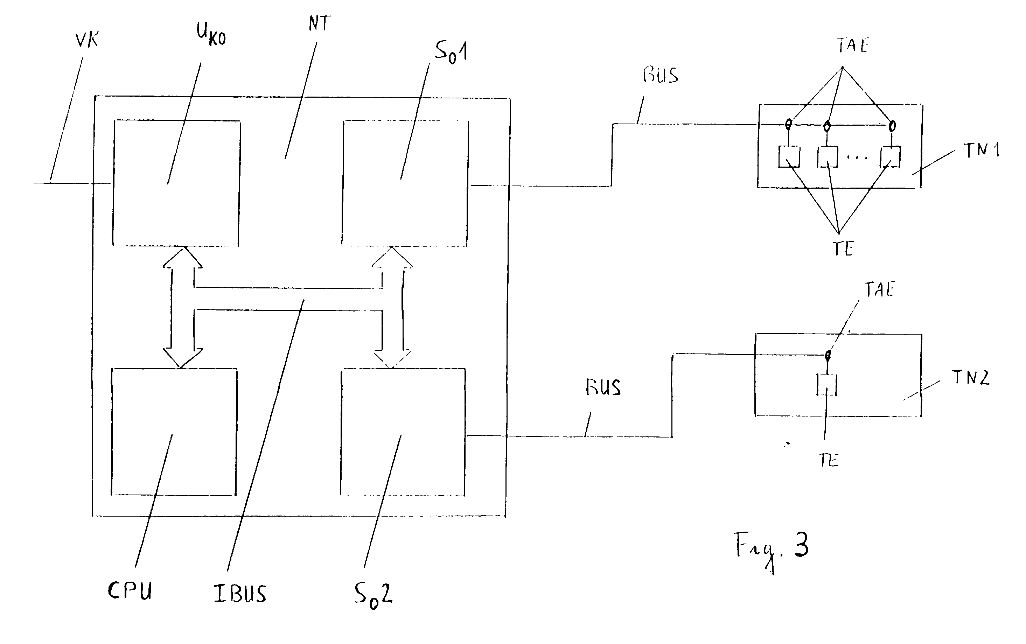

Im Innern der Netzabschlüsse sind nur solche Baugruppen aufgeführt, die für die Erläuterung der Leitungsführung der Stromversorgungsleitungen wesentlich sind. Die zu beschreibenden Netzabschlüsse entsprechen denjenigen der ISDN-Basisanschlußkonfiguration. Die Erfindung kann auch auf andere Netzabschlüsse, wie z.B. denjenigen in Figur 3, angewendet werden.

Eine Spannungswandlungseinrichtung ACDC wandelt eine über das Stromversorgungskabel SK zugeführte Eingangswechselspannung in zwei Ausgangsgleichspannungen um; eine hohe Ausgangsgleichspannung mit einer positiven Versorgungsspannung VDD und einer negativen Versorgungsspannung VSS zur Fernspeisung der Endgeräte TE und eine niedrige Ausgangsgleichspannung VREF zur Versorgung der aktiven Bauteile der Netzabschlüsse NT.

Die Netzabschlüsse NT beinhalten jeweils drei Leitungsübertrager LT₁, LT₂, LT₃, einen U_{K0}-Schnittstellenschaltkreis UIC und einen S₀-Schnittstellenschaltkreis SIC. Der U_{K0}-Schnittstellenschaltkreis UIC und der S₀-Schnittstellenschaltkreis SIC sind über einen bidirektionalen Bus miteinander verbunden und haben einen gemeinsamen Versorgungsspannungsanschluß. Netzseitig ist der U_{K0}-Schnittstellenschaltkreis UIC über einen Leitungsübertrager LT₃ mit der Vorfeldeinrichtung VE verbunden. Teilnehmerseitig ist der S₀-Schnittstellenschaltkreis SIC über zwei Leitungsübertrager LT₁ und LT₂ mit Anschlüssen für die Endgeräte den Teilnehmer verbunden. Die U_{K0}-Schnittstellenschaltkreise UIC und die S₀-Schnittstellenschaltkreise SIC mehrerer Netzabschlüsse NT werden über die durch die Spannungswandlungseinrichtung ACDC erzeugte niedrige Ausgangsgleichspannung VREF gespeist. Über teilnehmerseitige Mittelanzapfungen der beiden mit dem S₀-Schnittstellenschaltkreis SIC verbundenen Leitungsübertrager LT₁ und LT₂ werden durch eine Phantomschaltung ein oder mehrere Endgeräte gespeist. Die Speisespannung für die Phantomschaltung ist die durch die Spannungswandlungseinrichtung ACDC erzeugte hohe Ausgangsgleichspannung VDD, VSS.

Fig. 3 zeigt einen Netzabschluß NT eines diensteintegrierten digitalen Netzes, seine teilnehmerseitigen und netzseitigen Verbindungen BUS, VK und einen Vorgang der Informationsübertragung vom diensteintegrierten digitalen Netz zu den Endstellen und umgekehrt. Der Übersichtlichkeit halber sind die Stromversorgungsleitungen innerhalb des Netzabschlusses NT nicht mit eingezeichnet.

Der Netzabschluß NT beinhaltet eine U_{K0}-Schnittstelle U_{K0} für netzseitige Verbindungen, zwei S₀-Schnittstellen S₀1, S₀2 für teilnehmerseitige Verbindungen, eine Steuereinheit CPU und einen internen Bus IBUS. Die U_{K0}-Schnittstelle U_{K0}, die beiden S₀-Schnittstellen S₀1, S₀2 und die Steuereinheit CPU sind über den internen Bus IBUS miteinander verbunden. Über den internen Bus IBUS werden bidirektional Informationen übertragen.

Netzseitig ist der Netzabschluß NT über Verzweigungskabel VK mit einer Vorfeldeinrichtung VE verbunden.

Teilnehmerseitig ist der Netzabschluß NT mit zwei Endstellen verbunden. Jede Endstelle, d.h. jeder Teilnehmer ist über eine separate S₀-Schnittstelle S₀1; S₀2 mit dem Netzabschluß NT verbunden. Jede Endstelle enthält eine Endstellenleitung BUS und ein oder mehrere Telekommunikationsanschlußeinheiten TAE. Die Endgeräte TE der Teilnehmer sind jeweils über die Telekommunikationsanschlußeinheit TAE und die Endstellenleitung BUS mit der jeweiligen S₀-Schnittstelle S₀1, S₀2 verbunden.

Der Netzabschluß NT befindet sich außerhalb der Räume der Teilnehmer TN1, TN2. Dabei wird er von einer vom Telekommunikationsnetz unabhängigen Stromversorgung gespeist (vgl. Fig. 2).

Bei einer Informationsübertragung vom diensteintegrierten digitalen Netz zu den Endstellen werden die Informationen zunächst zur U_{K0}-Schnittstelle U_{K0} übertragen. Die Informationen werden im Zeitmultiplexverfahren in einer Rahmenstruktur übertragen. Die Rahmenstruktur enthält zwei B-Kanäle (64 kbit/s) und einen D-Kanal (16kbit/s). Die B-Kanäle enthalten dabei Nutzinformationen, wie z.B. Sprache, Text, Daten, Bilder. Der D-Kanal enthält Signalisierungsinformationen. Die Signalisierungsinformationen dienen u.a. dem Verbindungsaufbau und -abbau bei Verbindungen von Endstellen über das diensteintegrierte digitale Netz. In den Signalisierungsinformationen des D-Kanals wird zusätzlich eine Information über eine Aufteilung und eine Zuweisung der B-Kanäle auf die beiden Endstellen eingefügt. Dabei ist ein Bit für die Auswahl der Endstelle und ein Bit für die Zuweisung eines B-Kanals pro Endstelle vorgesehen. Die Aufteilung der B-Kanäle auf die beiden Endstellen kann z.B. durch das europäische digitale Signalisierungssystem Nr. 1 Protokoll (EDSS1-Protokoll) für den D-Kanal mittels des Dienstemerkmals Mehrfachrufnummer (MSN) realisiert werden.

Die Aufteilung der B-Kanäle wird durch die Vermittlungsstelle bestimmt. Die Informationen der B-Kanäle und des D-Kanals werden zur Steuereinheit CPU übertragen. Die Steuereinheit CPU ist z.B. ein Prozessor. Sie wertet die Signalisierungsinformationen des D-Kanals aus und überträgt jeder Endstelle über die jeweilige S₀-Schnittstelle S₀1; S₀2 nur die zugehörigen Nutz- und/oder Signalisierungsinformationen. Jede Endstelle erhält somit einen B-Kanal mit 64 kbit/s zur Nutzinformationsübertragung und im Zeitmultiplex den D-Kanal zur Signalisierungsinformationsübertragung zugewiesen. Der D-Kanal kann zusätzlich im Zeitmultiplexverfahren von einer oder von beiden Endstellen zur Übertragung paketvermittelter Daten genutzt werden. Damit kann jede Endstelle zwei Kanäle, einen 64 kbit/s-Kanal und einen 16 kbit/s-Kanal zur simultanen Übertragung von Nutzinformationen, z.B. Sprache und Daten, nutzen.

Bei einer Informationsübertragung von den Endstellen in das diensteintegrierte digitale Netz werden die Informationen zunächst von den Endstellen über die jeweilige S₀-Schnittstelle S₀1; S₀2 zur Steuereinheit CPU übertragen. Die Steuereinheit CPU bündelt die teilnehmerspezifischen Informationen und überträgt sie über die U_{K0}-Schnittstelle ins diensteintegrierte digitale Netz. Die Signalisierungsinformationen und die paketvermittelten Daten der einen Endstelle und diejenigen der anderen Endstelle werden dabei im Zeitmultiplexverfahren im D-Kanal übertragen. Die Nutzinformationen der einen Endstelle werden in dem einen B-Kanal, die Nutzinformationen der anderen Endstelle werden in dem anderen B-Kanal übertragen, die Aufteilung erfolgt dabei nach vorheriger Zuweisung durch die Vermittlungsstelle.

Der Netzabschluß NT kann auch nur mit einer Endstelle verbunden sein. In diesem Fall ist eine der beiden S₀ -Schnittstellen S₀1; S₀2 unbelegt. Der Endstelle können dann wahlweise ein oder zwei Nutzinformationskanäle zur Informationsübertragung zugewiesen werden.

Beim Ausführungsbeispiel liegt ein diensteintegriertes digitales Netz (ISDN) als Telekommunikationsnetz vor. Über die Netzabschlüsse NT werden dabei jeweils Informationen in einer Rahmenstruktur, die zwei Nutzinformationskanäle und einen Signalisierungskanal enthält, übertragen. Die Erfindung kann auch bei einem anderen Netz als dem diensteintegrierten digitalen Netz angewendet werden. Das andere Netz kann eine Rahmenstruktur mit mehr als zwei Nutzinformationskanälen und möglicherweise auch mehr als einen Signalisierungskanal enthalten. Damit könnten z.B. mehr als zwei Endstellen mit einem Netzabschluß NT verbunden werden oder zwei Endstellen könnte eine erhöhte Übertragungskapazität zur Verfügung gestellt werden.

## Patentansprüche

1. Netzabschlußeinrichtung (NTE) zum Abschluß eines Telekommunikationsnetzes, dadurch gekennzeichnet, daß sie mehrere Netzabschlüsse (NT) und eine Spannungswandlungseinrichtung (ACDC) aufweist, wobei die Spannungswandlungseinrichtung (ACDC) über eine vom Telekommunikationsnetz unabhängigen Stromversorgung (SK) gespeist wird und Versorgungsspannungen für mehrere Netzabschlüsse (NT) bereitstellt.

2. Netzabschlußeinrichtung nach Anspruch 1, dadurch gekennzeichnet, daß sie optisch-elektrisch Wandler aufweist.

3. Netzabschlußeinrichtung nach Anspruch 1, dadurch gekennzeichnet, daß ein oder mehrere Netzabschlüsse (NT) jeweils eine netzseitige Schnittstelle (U_{K0}), eine oder mehrere teilnehmerseitige Schnittstellen (S₀1, S₀2) und eine Steuereinheit (CPU) aufweisen, und dabei netzseitig über den oder die Netzabschlüsse (NT) Informationen im Multiplexverfahren in einer Rahmenstruktur, die mehrere Nutzinformationskanäle und ein oder mehrere Signalisierungskanäle enthält, übertragen werden und dabei der oder den Endstellen (BUS, TAE) über die Steuereinheit (CPU) jeweils nur ein Teil der netzseitig verfügbaren Nutzinformationskanäle zugewiesen wird.

4. Netzabschlußeinrichtung nach Anspruch 3, dadurch gekennzeichnet, daß die Zuweisung des oder der Nutzinformationskanäle durch eine Zusatzinformation zur Signalisierungsinformation erfolgt und die Zusatzinformation die Auswahl der Endstelle (BUS, TAE) und die Auswahl des oder der Nutzinformationskanäle enthält.

5. Netzabschlußeinrichtung nach Anspruch 3, dadurch gekennzeichnet, daß das Telekommunikationsnetz ein ISDN-Netz ist, und daß mindestens eine teilnehmerseitige Schnittstelle eine S₀-Schnittstelle und die netzseitige Schnittstelle eine U-Schnittstelle ist.

6. Vorfeldabschlußeinrichtung (CURB) mit einer Netzabschlußeinrichtung (NTE) nach Anspruch 1 und einer Vorfeldeinrichtung (VE), bei der die Netzabschlußeinrichtung (NTE) und die Vorfeldeinrichtung (VE) über eine gemeinsame Stromversorgung (SK) gespeist werden.

7. Vorfeldabschlußeinrichtung nach Anspruch 6, dadurch gekennzeichnet, daß die Vorfeldeinrichtung (VE) optisch-elektrisch Wandler aufweist.

8. Vorfeldabschlußeinrichtung nach Anspruch 6, dadurch gekennzeichnet, daß die Vorfeldeinrichtung (VE) ein Kabelverzweiger ist.

9. Vorfeldabschlußeinrichtung nach Anspruch 6, dadurch gekennzeichnet, daß die Vorfeldeinrichtung (VE) ein Verteiler ist.

10. Vorfeldabschlußeinrichtung nach Anspruch 6, dadurch gekennzeichnet, daß sich die Netzabschlußeinrichtung (NTE) und die Vorfeldeinrichtung (VE) in einem Gehäuse befinden.

## Claims

1. Network terminating device (NTE) for terminating a telecommunications network, characterized in that it comprises a plurality of network terminations (NT) and a voltage conversion device (ACDC), the voltage conversion device (ACDC) being fed via a power supply (SK) which is independent of the telecommunications network, and supply voltages being provided for a plurality of network terminations (NT).

2. Network terminating device according to Claim 1, characterized in that it comprises optoelectrical converters.

3. Network terminating device according to Claim 1, characterized in that one or more network terminations (NT) each comprise a network-side interface (U_{KO}), one or more subscriber-side interfaces (Sₒ1, Sₒ2) and a control unit (CPU), and at the same time information is transmitted on the network-side via the network termination or terminations (NT) by the multiplex method in a frame structure which contains a plurality of user information channels and one or more signalling channels and, at the same time, only some of the user information channels available on the network side are assigned in each case to the terminal station or terminal stations (BUS, TAE) via the control unit (CPU).

4. Network terminating device according to Claim 3, characterized in that the user information channel or channels is/are assigned by information additional to the signalling information and the additional information contains the selection of the terminal station (BUS, TAE) and the selection of the user information channel or channels.

5. Network terminating device according to Claim 3, characterized in that the telecommunications network is an ISDN network and in that at least one subscriber-side interface is an Sₒ interface and the network-side interface is a U interface.

6. Remote terminating device (CURB) comprising a network terminating device (NTE) according to Claim 1 and a remote device (VE) in which the network terminating device (NTE) and the remote device (VE) are supplied by means of a common power supply (SK).

7. Remote terminating device according to Claim 6, characterized in that the remote device (VE) comprises optoelectrical converters.

8. Remote terminating device according to Claim 6, characterized in that the remote device (VE) is a cable distributor box.

9. Remote terminating device according to Claim 6, characterized in that the remote device device (VE) is a distributor.

10. Remote terminating device according to Claim 6, characterized in that the network terminating device (NTE) and the remote device (VE) are disposed in one housing.

## Revendications

1. Terminaison de réseau (NTE) pour la terminaison d'un réseau de télécommunication, caractérisée par le fait qu'elle comprend plusieurs régies d'abonnés (NT) et un équipement de transformation de tension (ACDC), l'équipement de transformation de tension (ACDC) étant alimentée par un bloc d'alimentation (SK) indépendant du réseau de télécommunication et fournissant des tensions d'alimentation pour plusieurs régies d'abonnés (NT).

2. Terminaison de réseau conformément à la revendication 1, caractérisée par le fait qu'elle comprend des convertisseurs optique-électrique.

3. Terminaison de réseau conformément à la revendication 1, caractérisée par le fait que un ou plusieurs régies d'abonnés (NT) comportent chacune une interface côté réseau (U_{KO}), une ou plusieurs interfaces côté abonné (Sₒ₁, Sₒ₂) et une unité de commande (CPU), et que des informations sont alors transmises en multiplexage temporel, par l'intermédiaire de la ou des régies d'abonnés, sous forme de trame comprenant plusieurs canaux d'informations utiles et un ou plusieurs canaux de signalisation, et que l'unité de commande (CPU) affecte à chaque station terminale (BUS, TAE) seulement une partie des canaux d'informations utiles disponibles dans le réseau.

4. Terminaison de réseau conformément à la revendication 3, caractérisée par le fait que l'affectation du ou des canaux d'informations utiles se fait par une information supplémentaire à la l'information de signalisation, et l'information supplémentaire contient la sélection de la station terminale (BUS, TAE) et la sélection du ou des canaux d'informations utiles.

5. Terminaison de réseau conformément à la revendication 3, caractérisée par le fait que le réseau de télécommunication utilisé est un réseau RNIS, et que au moins une interface côté abonné est une interface Sₒ et l'interface côté réseau est une interface U.

6. Terminaison d'avant-champ (CURB) avec une terminaison de réseau (NTE) conformément à la revendication 1 et un équipement d'avant-champ (VE), dans lequel la terminaison de réseau (NTE) et l'équipement d'avant-champ (VE) sont alimentés par un bloc d'alimentation commun (SK).

7. Terminaison d'avant-champ conformément à la revendication 6, caractérisée par le fait que l'équipement d'avant-champ (VE) comprend des convertisseurs optique-électrique.

8. Terminaison d'avant-champ conformément à la revendication 6, caractérisée par le fait que l'équipement d'avant-champ (VE) est un sous-répartiteur.

9. Terminaison d'avant-champ conformément à la revendication 6, caractérisée par le fait que l'équipement d'avant-champ (VE) est un distributeur.

10. Terminaison d'avant-champ conformément à la revendication 6, caractérisée par le fait que la terminaison de réseau (NTE) et l'équipement d'avant-champ (VE) se trouvent dans un seul et même boîtier.
